# EUROPÄISCHE PATENTSCHRIFT

(11) **EP 2 593 656 B1**
(45) Veröffentlichungstag und Bekanntmachung des Hinweises auf die Patenterteilung: **09.09.2020**
(21) Anmeldenummer: 11733642.0
(22) Anmeldetag: 07.07.2011
(51) Int. Cl.: F02G 5/02, F01K 23/06, F01N 3/04, F01N 5/02, F28D 7/16

(54) **SYSTEM ZUR NUTZUNG VON ABWÄRME EINES VERBRENNUNGSMOTORS**
SYSTEM FOR UTILIZING WASTE HEAT OF AN INTERNAL COMBUSTION ENGINE
SYSTÈME D'UTILISATION DE LA CHALEUR DISSIPÉE D'UN MOTEUR À COMBUSTION INTERNE

(30) Priorität: 13.07.2010 DE 102010027068
(43) Veröffentlichungstag der Anmeldung: 22.05.2013
(73) Patentinhaber: MAHLE Behr GmbH & Co. KG, 70469 Stuttgart (DE)
(72) Erfinder: GESKES, Peter, 73760 Ostfildern (DE); IRMLER, Klaus, 72072 Tübingen (DE); SCHMIDT, Michael, 74321 Bietigheim-Bissingen (DE); STREHLAU, Arthur, 70825 Korntal-Münchingen (DE)
(74) Vertreter: Grauel, Andreas
(86) Internationale Anmeldenummer: PCT/EP2011/061554
(87) Internationale Veröffentlichungsnummer: WO 2012/007359

(56) Entgegenhaltungen:
- EP-A1- 1 669 568
- WO-A2-2007/115579
- US-A- 6 119 457
- US-A1- 2009 126 918
- US-A1- 2009 277 606

## Beschreibung

Die Erfindung betrifft ein System zur Nutzung von Abwärme eines Verbrennungsmotors mittels des Clausius-Rankine-Kreisprozesses gemäß dem Oberbegriff des Anspruches 1, ein Verfahren zum Betreiben eines System zur Nutzung von Abwärme eines Verbrennungsmotors mittels des Clausius-Rankine-Kreisprozesses gemäß dem Oberbegriff des Anspruches 8 und einen Verbrennungsmotor mit einem System zur Nutzung von Abwärme des Verbrennungsmotors mittels des Clausius-Rankine-Kreisprozesses gemäß dem Oberbegriff des Anspruches 11.

Verbrennungsmotoren werden in verschiedenen technischen Anwendungen zur Umwandlung von Wärmeenergie in mechanische Energie eingesetzt. In Kraftfahrzeugen, insbesondere in Lastkraftwagen, werden Verbrennungsmotoren eingesetzt, um das Kraftfahrzeug fortzubewegen. Der Wirkungsgrad von Verbrennungsmotoren kann durch den Einsatz von Systemen zur Nutzung von Abwärme des Verbrennungsmotors mittels des Clausius-Rankine-Kreisprozesses erhöht werden. Das System wandelt dabei Abwärme des Verbrennungsmotors in mechanische Energie um. Das System umfasst einen Kreislauf mit Leitungen mit einem Arbeitsmedium, z. B. Wasser, eine Pumpe zum Fördern des Arbeitsmediums, einen Verdampferwärmeübertrager zum Verdampfen des flüssigen Arbeitsmedium, eine Expansionsmaschine, einen Kondensator zum Verflüssigen des dampfförmigen Arbeitsmediums und einen Auffang- und Ausgleichsbehälter für das flüssige Arbeitsmedium. Durch den Einsatz derartiger Systeme in einem Verbrennungsmotor kann bei einem Verbrennungsmotor mit einem derartigen System als Bestandteil des Verbrennungsmotors der Gesamtwirkungsgrad des Verbrennungsmotors erhöht werden.

In dem Verdampferwärmeübertrager wird das Arbeitsmedium, beispielsweise Wasser, durch Abwärme des Verbrennungsmotors verdampft und anschließend wird das verdampfte Arbeitsmedium der Expansionsmaschine zugeleitet, in welcher das gasförmige Arbeitsmedium expandiert und mechanische Arbeitet leistet mittels der Expansionsmaschine. In dem Verdampferwärmeübertrager wird beispielsweise durch einen Strömungskanal das Arbeitsmedium und durch einen Abgasströmungskanal Abgas des Verbrennungsmotors geleitet. Dadurch wird die Wärme von dem Abgas mit einer Temperatur im Bereich von beispielsweise zwischen 400° und 600° C auf das Arbeitsmedium in dem Verdampferwärmeübertrager übertragen und dadurch wird das Arbeitsmedium von dem flüssigen Aggregatzustand in den dampfförmigen Aggregatzustand überführt.

Für die Leistungsfähigkeit des Verdampferwärmeübertragers gibt es zwei Optimierungskriterien. Zum einen soll der Druckverlust möglichst minimal sein, d. h. der Verdampferwärmeübertrager soll beim Durchleiten des Arbeitsmediums einen möglichst geringen Druckverlust verursachen. Dies bedeutet, dass an dem Strömungskanal und einer Vielzahl von hydraulisch parallel geschalteten Strömungsteilkanälen möglichst keine Umlenkungen noch innere Strukturen vorhanden sind, um einen möglichst geringen Druckverlust zur Verfügung stellen zu können. Dabei ist zu berücksichtigen, dass mit dem Verdampfen des Arbeitsmediums und der dadurch verbundenen Änderung des Aggregatzustandes sich die Strömungsgeschwindigkeit vervielfacht und dadurch der Druckverlust ansteigt. Ein zweites Optimierungskriterium ist die Wärmeleistung, d. h. die möglichst gute Wärmeübertragung von dem Abgas auf das Arbeitsmedium. Bei einem Aufbau des Verdampferwärmeübertragers beispielsweise als Plattenwärmeübertrager bzw. in Stapelscheibenbauweise strömt durch die zwischen den Platten sich ausbildenden Fluidkanäle durch einen Strömungskanal das Arbeitsmedium und durch den Abgasströmungskanal das Abgas. Dabei bilden sich auf dem übereinander gestapelten Platten des Verdampferwärmeübertrages abwechselnd ein Strömungsteilkanal zum Durchleiten von Arbeitsmitteln und ein Abgasströmungskanal als Abgasströmungsteilkanal zum Durchleiten des Abgases aus. Dabei sind die Strömungsteilkanäle parallel geschaltet, d. h. nach einer Einlassöffnung für das Arbeitsmedium an dem Verdampferwärmeübertrager wird das gesamte Arbeitsmedium zunächst in einen Strömungskanal eingeleitet und von dem Strömungskanal strömt das Arbeitsmedium in eine Vielzahl von hydraulisch parallel geschalteten Strömungsteilkanälen ein und anschließend nach dem Ausströmen aus dem parallel geschalteten Strömungsteilkanälen strömt das Arbeitsmedium wieder in einen Strömungskanal und vom Strömungskanal verlässt das Arbeitsmedium durch eine Auslassöffnung wieder den Verdampferwärmeübertrager.

Das durch den Abgasströmungskanal bzw. die Abgasströmungsteilkanäle durchgeleitete Abgas kann eine ungleichmäßige Strömungsverteilung aufweisen, d. h. dass in einzelnen Abgasströmungsteilkanälen wesentlich weniger Abgas pro Zeiteinheit durchgeleitet wird als durch andere Abgasströmungsteilkanäle. Dies kann dazu führen, dass in einzelnen Strömungsteilkanälen, durch welche das Arbeitsmedium durchgeleitet wird, das Arbeitsmedium schon früher verdampft als in anderen Strömungsteilkanälen. Das frühere Verdampfen des Arbeitsmediums und der dadurch verbundene Wechsel des Aggregatzustandes von flüssig nach gasförmig führt zu einer Verstärkung des Effektes der Ungleichverteilung, weil mit der Änderung des Aggregatzustandes auch der Druckverlust sich erhöht aufgrund der höheren Strömungsgeschwindigkeit des Arbeitsmediums und es dadurch in den Strömungsteilkanälen mit einer früheren Verdampfung zu einer zusätzlichen Verringerung des Volumenstromes kommt. Dies kann dazu führen, dass aufgrund des hohen Volumenstromes an den Strömungsteilkanälen mit einer späteren Verdampfung das Arbeitsmedium in einem flüssigen Aggregatzustand den Strömungsteilkanal verlässt und in anderen Strömungsteilkanälen das Arbeitsmedium den Strömungsteilkanal gasförmig verlässt. Dadurch kann an der Auslassöffnung des Verdampferwärmeübertragers ein Gemisch aus flüssigen und gasförmigen Arbeitsmedium austreten, was für den Gesamtdeckungsgrad des Systems von nachteiligem Effekt ist und insbesondere auch zu Schäden an der Expansionsmaschine führen kann.

Die WO 2009/089885 A1 zeigt eine Vorrichtung zum Austausch von Wärme zwischen einem ersten und einem zweiten Medium, mit in einer Stapelrichtung aufeinandergestapelten Scheibenpaaren, wobei zwischen den zwei Scheiben zumindest eines Scheibenpaares ein von einem ersten Medium durchströmbarer erster Strömungsraum und zwischen zwei zueinander benachbarten Scheibenpaaren ein von einem zweiten Medium durchströmbarer zweiter Strömungsraum ausgebildet ist, wobei der erste Strömungsraum einen ersten Strömungspfad mit einer nacheinander in entgegengesetzten Richtungen durchströmbaren Strömungspfadabschnitten für das erste Medium aufweist, welche durch eine zwischen den zumindest zwei Scheiben des zumindest einen Scheibenpaares angeordneter Trennwand voneinander getrennt sind.

Die WO 2007/115579 A2 offenbart einen turboaufgeladenen Dieselmotor mit einem Turbolader und mit einem Heizer oder Wärmeübertrager, welcher in einem Abgassammler angeordnet ist.

Die US 6 119 457 A offenbart einen Wärmeaustauschapparat, bei welchem ein poröses Material und ein keramischer Motor mit einem Turbolader verwendet wird, welcher von thermischer Energie des Abgases angetrieben wird.

Die Aufgabe der vorliegenden Erfindung besteht deshalb darin, ein System zur Nutzung von Abwärme eines Verbrennungsmotors mittels des Clausius-Rankine-Kreisprozesses, ein Verfahren zum Betreiben eines System zur Nutzung von Abwärme eines Verbrennungsmotors mittels des Clausius-Rankine-Kreisprozesses sowie einen Verbrennungsmotor mit einem System zur Nutzung von Abwärme des Verbrennungsmotors mittels des Clausius-Rankine-Kreisprozesses zur Verfügung zu stellen, bei dem das Arbeitsmedium an einem Verdampferwärmeübertrager im Wesentlichen vollständig von einem flüssigen in einen gasförmigen Aggregatzustand überführt werden kann.

Diese Aufgabe wird gelöst mit einem System zur Nutzung von Abwärme eines Verbrennungsmotors mittels des Clausius-Rankine-Kreisprozesses, umfassend einen Kreislauf mit Leitungen mit einem Arbeitsmedium, insbesondere Wasser, eine Pumpe zum Fördern des Arbeitsmediums, einen Verdampferwärmeübertrager zum Verdampfen des flüssigen Arbeitsmediums mit Abwärme des Verbrennungsmotors mit einer Einlassöffnung zum Einleiten des Arbeitsmediums in einen Strömungskanal und eine Auslassöffnung zum Ausleiten des Arbeitsmediums aus dem Strömungskanal und der Strömungskanal in mehrere hydraulisch parallel geschaltete Strömungsteilkanäle unterteilt ist, eine Expansionsmaschine, einen Kondensator zum Verflüssigen des dampfförmigen Arbeitsmediums, einen Auffang- und Ausgleichsbehälter für das flüssige Arbeitsmedium, wobei der Verdampferwärmeübertrager einen Mischkanal aufweist und in Strömungsrichtung des Arbeitsmediums wenigstens zwei hydraulisch parallel geschaltete Strömungsteilkanäle in den Mischkanal münden und in Strömungsrichtung des Arbeitsmedium der Mischkanal in wenigstens zwei hydraulisch parallel geschaltete Strömungsteilkanäle mündet.

In dem Verdampferwärmeübertrager wird das Arbeitsmedium, z. B. Wasser, durch eine Vielzahl von parallel geschalteten Strömungsteilkanälen durchgeleitet. Dabei kann es an den hydraulisch parallel geschalteten Strömungsteilkanälen zu einer unterschiedlichen Erwärmung des Arbeitsmediums kommen aufgrund unterschiedlicher Volumenströme mit denen die Abgasströmungsteilkanäle mit Abgas durchströmt werden. Dies führt zu einer unterschiedlichen Erwärmung des Arbeitsmediums in den Strömungsteilkanälen und dadurch kann aus einzelnen Strömungsteilkanälen das Arbeitsmedium im flüssigen und aus anderen Strömungsteilkanälen im gasförmigen Aggregatzustand austreten. Eine Veränderung des Aggregatzustandes von flüssig auf gasförmig erhöht außerdem zusätzlich den Druckverlust an dem Strömungsteilkanal oder den Strömungsteilkanälen, in welchen das Arbeitsmedium in den gasförmigen Aggregatzustand übergegangen ist, so dass dadurch dieser Effekt noch zusätzlich verstärkt wird, weil dadurch in den Strömungsteilkanälen oder dem Strömungsteilkanal, in welchem sich das Arbeitsmedium noch vollständig im flüssigen Aggregatzustand befindet, wesentlich mehr Arbeitsmedium durchströmt.

Aufgrund des vorhandenen Mischkanales durchströmt den Verdampferwärmeübertrager das Arbeitsmedium zunächst durch wenigstens zwei parallel geschaltete Strömungsteilkanäle als Parallelbereich, anschließend wird das aus diesen wenigstens zwei parallel geschalteten Strömungsteilkanälen ausgeleitete Arbeitsmedium wieder insgesamt dem Mischkanal zugeführt als einen Strömungsraum für das durch die wenigstens zwei parallel geschalteten Strömungsteilkanälen durchgeleitete Arbeitsmedium und dort vermischt und anschließend wieder wenigstens zwei hydraulisch geschalteten Strömungsteilkanälen als zusätzlichen Parallelbereich zugeführt zum Erwärmen und Verdampfen des Arbeitsmediums. Dadurch können Ungleichmäßigkeiten in der Temperaturverteilung oder der Verdampfung zwischen den parallel geschalteten Strömungsteilkanälen ausgeglichen werden, weil nach dem Austreten aus dem ersten Parallelbereich das Arbeitsmedium in dem Mischkanal wieder vermischt und dadurch wieder eine im Wesentlichen homogene Temperaturverteilung erreicht werden kann und anschließend dem zweiten Parallelbereich zugeführt und dort weiter erwärmt und verdampft werden kann. Dadurch kann in vorteilhafter Weise aus dem Verdampferwärmeübertrager im Wesentlichen oder ausschließlich dampfförmiges Arbeitsmedium ausgeleitet werden, weil Unterschiede in der Erwärmung oder Verdampfung in den parallel geschalteten Strömungsteilkanälen aufgrund der Vermischung in dem Mischkanal reduziert werden können.

Insbesondere weist der Verdampferwärmeübertrager wenigstens zwei Mischkanäle auf und in Strömungsrichtung des Arbeitsmediums sind hydraulisch zwischen den wenigstens zwei Mischkanälen hydraulisch in Reihe zu dem wenigstens einen Mischkanal jeweils wenigstens zwei hydraulisch parallel geschaltete Strömungsteilkanäle angeordnet. Der Verdampferwärmeübertrager kann auch mehrere Mischkanäle, z. B. zwei, drei oder vier Mischkanäle, aufweisen mit jeweils daran in Strömungsrichtung vor und nach den Mischkanälen vorhandenen Parallelbereichen mit wenigstens zwei hydraulisch parallel geschalteten Strömungsteilkanälen. Dadurch kann der Effekt der gleichmäßigen Temperaturverteilung und der gleichmäßigen Erwärmung und Verdampfung des Arbeitsmediums in den Verdampferwärmeübertrager zusätzlich verbessert werden und dadurch eine noch gleichmäßigere Erwärmung des Arbeitsmediums erreicht werden, so dass ein Austreten von Arbeitsmedium im flüssigen Aggregatzustand aus dem Verdampferwärmeübertrager im Wesentlichen ausgeschlossen ist.

In einer weiteren Ausgestaltung weist der Verdampferwärmeübertrager wenigstens zwei Parallelbereiche mit wenigstens zwei hydraulisch parallel geschalteten Strömungsteilkanälen auf. Als ein Parallelbereich wird ein Abschnitt oder ein Bereich des Verdampferwärmeübertragers somit aufgefasst, der wenigstens zwei hydraulisch parallel geschaltete Strömungsteilkanäle zum Durchleiten des zu verdampfenden Arbeitsmediums aufweist.

In einer ergänzenden Ausführungsform weist der wenigstens zwei Parallelbereiche wenigstens 2, 5, 10, 20 oder 30 hydraulisch parallel geschaltete Strömungsteilkanäle auf.

Vorzugsweise umfasst der Verdampferwärmeübertrager mehrere getrennte Baueinheiten und in jeder Baueinheit ist wenigstens ein, vorzugsweise nur ein, Parallelbereich angeordnet und die Baueinheiten sind hydraulisch mit dem Mischkanal miteinander verbunden. Der Verdampferwärmeübertrager kann somit mehrere getrennte Baueinheiten, vorzugsweise mit einem separaten Gehäuse, aufweisen und in diesen separaten Baueinheiten ist ein Parallelbereich mit einer Vielzahl von hydraulisch parallel geschalteten Strömungsteilkanälen vorhanden. Jede Baueinheit weist eine Ein- und Auslassöffnung zum Ein- und Ausleiten des Arbeitsmediums auf und die einzelnen Baueinheiten sind dabei in Reihe geschaltet. Weist der Verdampferwärmeübertrager beispielsweise zwei Baueinheiten auf, wird nach dem Ausleiten des Arbeitsmediums aus der ersten Baueinheit das Arbeitsmedium durch einen Mischkanal, der hier insbesondere als ein Mischrohr ausgeführt ist, zu der zweiten Baueinheit geleitet und dadurch während des Leitens des Arbeitsmediums von der ersten zur zweiten Baueinheit in den Mischkanal bzw. dem Mischrohr das Arbeitsmedium durchmischt und anschließend erfolgt in der zweiten Baueinheit das Durchleiten wiederum durch wenigstens zwei hydraulisch parallel geschalteten Strömungsteilkanäle.

In einer Variante umfasst der Verdampferwärmeübertrager nur eine Baueinheit und in der Baueinheit sind wenigstens zwei Parallelbereiche angeordnet. Die beiden Parallelbereiche des Verdampferwärmeübertragers können auch an einem Verdampferwärmeübertrager mit nur einer Baueinheit ausgebildet sein. Vorzugsweise umfasst somit der Verdampferwärmeübertrager nur ein Gehäuse und innerhalb des Gehäuses sind wenigstens zwei Parallelbereiche ausgebildet.

Zweckmäßig umfasst der Verdampferwärmeübertrager wenigstens einen Abgasströmungskanal, vorzugsweise eine Vielzahl an Abgasströmungsteilkanälen, zum Durchleiten von Abgas zur Abgabe von Wärme von dem Abgas an das Arbeitsmedium und/oder der Verdampferwärmeübertrager ist ein Plattenwärmeübertrager, ein Spiralwärmeübertrager, ein Rohrbündelwärmeübertrager oder ein Mantelrohrwärmeübertrager und/oder von dem System ist ein in dieser Schutzrechtsanmeldung beschriebenes Verfahren ausführbar. Der Verdampferwärmeübertrager kann entweder von Abgas umströmt sein oder der Verdampferwärmeübertrager weist wenigstens einen Abgasströmungskanal zum Durchleiten von Abgas aus. Bei einer Ausbildung des Verdampferwärmeübertrages als Plattenwärmeübertrager wird durch die übereinander gestapelten Platten des Verdampferwärmeübertragers abwechselnd durch die Teilkanäle, welche sich zwischen den Platten ausbilden, das Arbeitsmedium und in einem darauffolgenden Teilkanal für das Abgas das Abgas durchgeleitet. Bevorzugt werden in einer weiteren Ausführungsform Abgas und Arbeitsmedium im Gegenstrom geführt.

Erfindungsgemäßes Verfahren zum Betreiben eines System zur Nutzung von Abwärme eines Verbrennungsmotors mittels des Clausius-Rankine-Kreisprozesses, eines Verfahrens gemäß einem oder mehrerer der Ansprüche 8 bis 10, mit den Schritten: Fördern eines Arbeitsmediums in einem Kreislauf durch Leitungen mittels einer Pumpe, Verdampfen des Arbeitsmediums in einem Verdampferwärmeübertrager mit Abwärme des Verbrennungsmotors, Expandieren des Arbeitsmediums an einer Expansionsmaschine und Leisten von mechanischer Arbeit, Verflüssigen des dampfförmigen Arbeitsmediums an einem Kondensator, wobei das Arbeitsmedium in dem Verdampferwärmeübertrager eingeleitet wird und durch einen Strömungskanal strömt, hydraulisch nach dem Strömungskanal in wenigstens zwei Strömungsteilkanäle als Parallelbereich eingeleitet wird und durch die wenigstens zwei Strömungsteilkanäle hydraulisch parallel geleitet wird, hydraulisch nach den wenigstens zwei Strömungsteilkanälen in einen Mischkanal eingeleitet wird und sich in dem Mischkanal das aus den wenigstens zwei Strömungsteilkanälen eingeleitete Arbeitsmedium durchmischt wird und hydraulisch nach dem Mischkanal das Arbeitsmedium in wenigstens zwei Strömungsteilkanäle als Parallelbereich eingeleitet wird und durch die wenigstens zwei Strömungsteilkanäle hydraulisch parallel geleitet wird und hydraulisch nach den wenigstens zwei Strömungsteilkanälen in den Strömungskanal eingeleitet wird.

In einer weiteren Ausführungsform wird das Arbeitsmedium durch wenigstens 3 Parallelbereiche geleitet und hydraulisch zwischen den wenigstens 3 Parallelbereichen durch je einen Mischkanal geleitet und vermischt, so dass das Arbeitsmedium durch wenigstens 2 Mischkanälen geleitet und vermischt wird.

Insbesondere wird dass Abgas zu den wenigstens zwei Parallelbereichen geleitet und dadurch wird von dem Abgas Wärme auf das Arbeitsmedium übertragen und vorzugsweise wird das Abgas an die wenigstens zwei Parallelbereiche durch wenigstens einen Abgasströmungskanal, vorzugsweise eine Vielzahl an Abgasströmungsteilkanälen, geleitet.

In einer weiteren Ausgestaltung ist die Expansionsmaschine eine Turbine oder eine Hubkolbenmaschine.

In einer weiteren Ausgestaltung umfasst das System einen Rekuperator, mittels dem Wärme aus dem Arbeitsmedium nach dem Durchströmen der Expansionsmaschine an das Arbeitsmedium vor dem Verdampfer übertragbar ist.

In einer zusätzlichen Variante besteht der Verdampferwärmeübertrager wenigstens teilweise, insbesondere vollständig, aus Edelstahl, da das Arbeitsmedium mit einem hohen Druck, z. B. im Bereich zwischen 40 bis 80 bar, und das Abgas mit einer hohen Temperatur, z. B. im Bereich ca. 600°C, durch den Verdampferwärmeübertrager geleitet wird.

Erfindungsgemäßer Verbrennungsmotor, insbesondere Hubkolbenverbrennungsmotor, mit einem System zur Nutzung von Abwärme des Verbrennungsmotors mittels des Clausius-Rankine-Kreisprozesses, umfassend einen Kreislauf mit Leitungen mit einem Arbeitsmedium, insbesondere Wasser, einer Pumpe zum Fördern des Arbeitsmediums, einen von der Abwärme des Verbrennungsmotors erwärmbaren Verdampfer zum Verdampfen des flüssigen Arbeitsmediums, eine Expansionsmaschine, einen Kondensator zum Verflüssigen des dampfförmigen Arbeitsmediums, einen Auffang- und Ausgleichsbehälter für das flüssige Arbeitsmedium, wobei das System als ein in dieser Schutzrechtsanmeldung beschriebenes System ausgebildet ist und/oder ein in dieser Schutzrechtsanmeldung beschriebenes Verfahren ausführbar ist.

In einer weiteren Ausgestaltung ist von dem System als Bestandteil des Verbrennungsmotors die Abwärme des Abgashauptstromes des Verbrennungsmotors und/oder die Abwärme der Abgasrückführung und/oder die Abwärme der komprimierten Ladeluft und/oder die Wärme eines Kühlmittels des Verbrennungsmotors nutzbar. Von dem System wird somit die Abwärme des Verbrennungsmotors in mechanische Energie umgewandelt und dadurch der Wirkungsgrad des Verbrennungsmotors in vorteilhafter Weise erhöht.

In einer weiteren Ausgestaltung umfasst das System einen Generator. Der Generator ist von der Expansionsmaschine antreibbar, so dass das System damit elektrische Energie oder elektrischen Strom zur Verfügung stellen kann.

In einer weiteren Ausgestaltung wird als Arbeitsmedium des Systems Wasser als Reinstoff, R245fa, Ethanol (Reinstoff oder Gemisch von Ethanol mit Wasser), Methanol (Reinstoff oder Gemisch von Methanol und Wasser) längerkettige Alkohole C5 bis C10, längerkettige Kohlenwasserstoffe C5 (Pentan) bis C8 (Oktan), Pyridin (Reinstoff oder Gemisch von Pyridin mit Wasser), Methylpyridin (Reinstoff oder Gemisch von Methylpyridin mit Wasser), Trifluorethanol (Reinstoff oder Gemisch von Trifluorethanol mit Wasser), Hexafluorbenzol, eine Wasser/Ammoniaklösung und/oder ein Wasser-Ammoniak-Gemisch eingesetzt.

Im Nachfolgenden werden Ausführungsbeispiele der Erfindung unter Bezugnahme auf die beigefügten Zeichnungen näher beschrieben. Es zeigt:

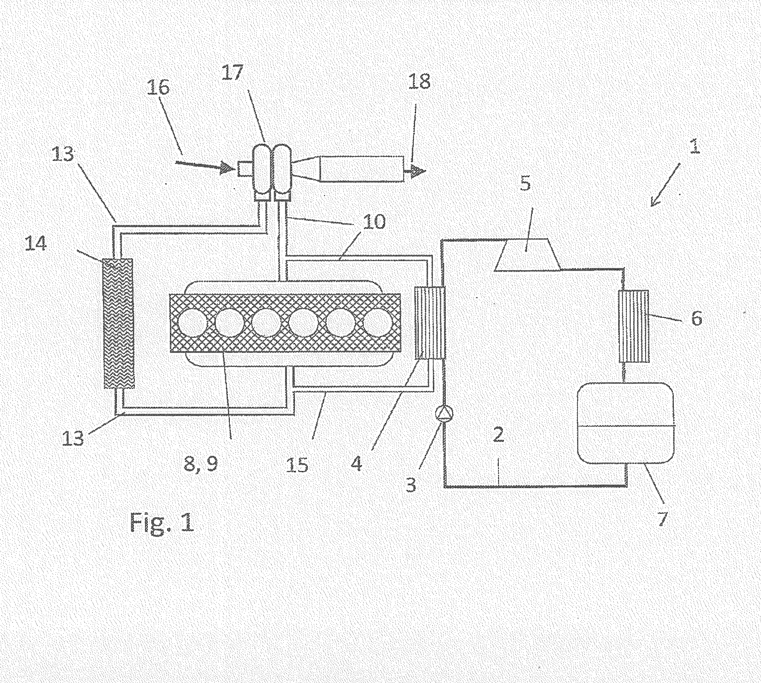

- Fig. 1: eine stark vereinfachte Darstellung eines Verbrennungsmotors mit einem System zur Nutzung von Abwärme des Verbrennungsmotors,
- Fig. 2: einen Schnitt eines Verdampferwärmeübertragers in einem ersten Ausführungsbeispiel,
- Fig. 3: eine perspektivische Ansicht des Verdampferwärmeübertragers gemäß Fig. 2,
- Fig. 4: einen Schnitt des Verdampferwärmeübertragers in einem zweiten Ausführungsbeispiel und
- Fig. 5: eine perspektivische Ansicht des Verdampferwärmeübertragers in einem dritten Ausführungsbeispiel.

Ein Verbrennungsmotor 8 als Hubkolbenverbrennungsmotor 9 dient zum Antrieb eines Kraftfahrzeuges, insbesondere Lastkraftwagens, und umfasst ein System 1 zur Nutzung von Abwärme des Verbrennungsmotors 8 mittels des Clausius-Rankine-Kreisprozesses. Der Verbrennungsmotor 8 weist einen Abgasturbolader 17 auf. Der Abgasturbolader 17 verdichtet Frischluft 16 in eine Ladeluftleitung 13 und ein in die Ladeluftleitung 13 eingebauter Ladeluftkühler 14 kühlt die Ladeluft vor der Zuführung zu dem Verbrennungsmotor 8 ab. Durch eine Abgasleitung 10 wird ein Teil des Abgases vom Verbrennungsmotor 8 abgeleitet und anschließend in einem Verdampferwärmeübertrager 4 abgekühlt sowie mit einer Abgasrückführleitung 15 der dem Verbrennungsmotor 8 mit der Ladeluftleitung 13 zugeführten Frischluft beigemischt. Ein anderer Teil des Abgases wird in den Abgasturbolader 17 eingeleitet, um den Abgasturbolader 17 anzutreiben und anschließend als Abgas 18 an die Umgebung abgegeben. Das System 1 weist Leitungen 2 mit einem Arbeitsmedium auf. In dem Kreislauf mit dem Arbeitsmedium ist eine Expansionsmaschine 5, ein Kondensator 6, ein Auffang- und Ausgleichsbehälter 7 sowie eine Pumpe 3 integriert. Von der Pumpe 3 wird das flüssige Arbeitsmedium auf ein höheres Druckniveau in dem Kreislauf angehoben und anschließend verdampft das flüssige Arbeitsmedium in dem Verdampferwärmeübertrager 4 und leistet anschließend in der Expansionsmaschine 5 mechanische Arbeit, indem das gasförmige Arbeitsmedium expandiert und darauffolgend einen geringen Druck aufweist. In dem Kondensator 6 wird das gasförmige Arbeitsmedium verflüssigt und anschließend wieder dem Auffang- und Ausgleichsbehälter 7 zugeführt.

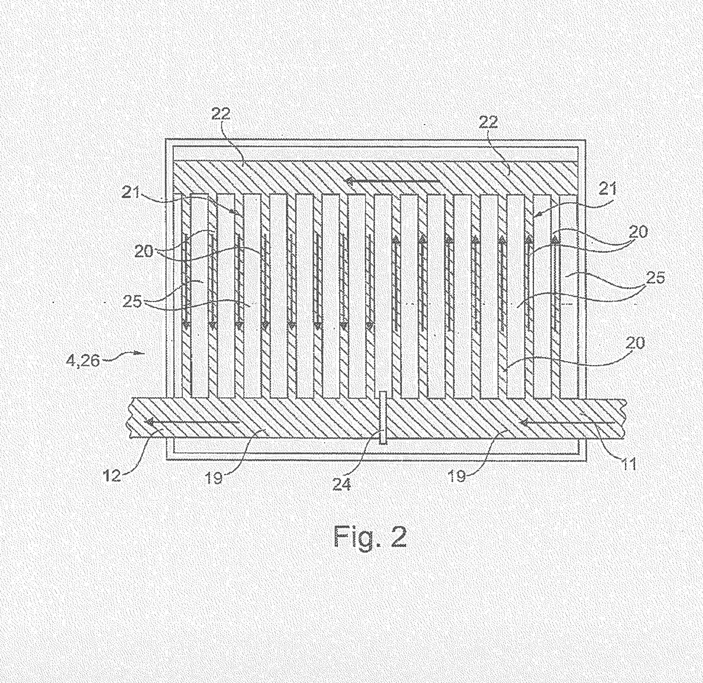

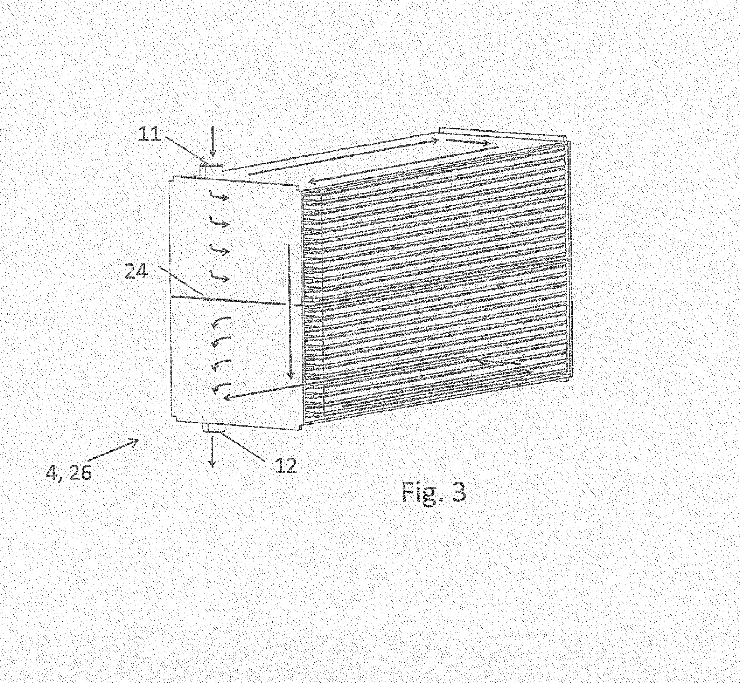

In Fig. 2 und 3 ist ein erstes Ausführungsbeispiel des Verdampferwärmeübertragers 4 dargestellt. Der Verdampferwärmeübertrager 4 ist dabei als nur eine Baueinheit 26 ausgebildet und weist eine Einlassöffnung 11 zum Einleiten von Arbeitsmedium, z. B. Wasser und eine Auslassöffnung 12 zum Ausleiten des Arbeitsmediums auf. Ferner wird durch nicht dargestellte Einlassöffnungen für Abgas, Abgas in den Verdampferwärmeübertrager 4 eingeleitet und durch eine nicht dargestellte Auslassöffnung Abgas aus dem Verdampferwärmeübertrager 4 wieder ausgeleitet. Das Abgas wird dabei zunächst in einen Abgasströmungskanal eingeleitet und von dem Abgasströmungskanal (nicht dargestellt) durch eine Vielzahl von hydraulisch parallel geschalteten Abgasströmungsteilkanälen 25 (Fig. 2) geleitet. Das Arbeitsmedium wird nach dem Einleiten durch die Einlassöffnung 11 in einen Strömungskanal 19 eingeleitet und aus dem Strömungskanal 19 strömt das Arbeitsmedium durch eine Vielzahl von hydraulisch parallel geschalteten Strömungsteilkanälen 20. Diese Vielzahl von hydraulisch parallel geschalteten Strömungsteilkanälen 20 stellen dabei einen Parallelbereich 21 des Verdampferwärmeübertragers 4 dar. Der Strömungskanal 19 an der Einlassöffnung 11 ist durch ein Trennblech 24 begrenzt. Aufgrund des Trennbleches 24 durchströmt das durch die Einlassöffnung 11 eingeleitete Arbeitsmedium an dem Strömungskanal 19 zunächst nur einen Teil sämtlicher hydraulisch parallel geschalteter Strömungsteilkanäle 20. Der erste Parallelbereich 21, durch welche das Arbeitsmedium nach dem Einleiten durch die Einlassöffnung 11 als erstes durchströmt, ist dabei in Fig. 2 rechts von dem Trennblech 24 angeordnet.

Nach dem Durchleiten des Arbeitsmediums durch die hydraulisch parallel geschalteten Strömungsteilkanäle an dem ersten Parallelbereich 21 strömt das Arbeitsmedium aus den Strömungsteilkanälen 20 wieder aus und gelangt in einen Mischkanal 22. In dem Mischkanal 22 vermischt sich wieder das aus den hydraulisch parallel geschalteten Strömungsteilkanälen 20 ausgeleitete Arbeitsmedium und strömt gemäß der Darstellung in Fig. 2 nach links zu einem zweiten Parallelbereich 21 des Verdampferwärmeübertragers 4. Der zweite Parallelbereich 21 des Verdampferwärmeübertragers 4 mit einer Vielzahl an hydraulisch parallel geschalteten Strömungsteilkanälen 20 ist dabei gemäß der Darstellung in Fig. 2 links von dem Trennblech 24 angeordnet. Aus dem Mischkanal 22 strömt das Arbeitsmedium somit in die Strömungsteilkanäle 20 des zweiten Parallelbereiches 21 ein und nach dem Durchleiten durch die Strömungsteilkanäle 20 des zweiten Parallelbereiches 21 strömt das Arbeitsmedium wieder in den Strömungskanal 19 an der Auslassöffnung 12. Nach dem Einleiten in den Strömungskanal 19 an der Auslassöffnung 12 wird das Arbeitsmedium wieder in gasförmigen Zustand aus dem Verdampferwärmeübertrager 4 ausgeleitet. Der Wärmeübergang von dem Abgas in den Abgasströmungsteilkanälen 25 in das Arbeitsmedium, welche durch die Strömungsteilkanäle 20 strömt, erfolgt dabei im Wesentlichen in den beiden Parallelbereichen 21. Dabei kann es in den Abgasströmungsteilkanälen 25 zu einem unterschiedlichen Volumenstrom kommen, so dass damit eine unterschiedliche Erwärmung und Verdampfung des Arbeitsmediums in den Strömungsteilkanälen 20 verbunden ist. Eine unterschiedliche Verdampfung führt insbesondere auch dazu, dass in einem Strömungsteilkanal 20 ohne Verdampfung des Arbeitsmediums kein Anstieg des Druckverlustes eintritt und dadurch in denjenigen Strömungsteilkanälen 20 ohne einen Übergang vom flüssigen in den gasförmigen Aggregatzustand ein wesentlich größerer Volumenstrom an Arbeitsmedium durchströmt als in denjenigen Strömungsteilkanälen 20, in welchen das Arbeitsmedium bereits in den gasförmigen Aggregatzustand übergeführt worden ist. Aufgrund des Vorhandenseins des Mischkanales 22 durchmischt sich nach dem Austreten des Arbeitsmediums aus den Strömungsteilkanälen 20 des ersten Parallelbereiches 21 das Arbeitsmedium wieder, so dass dadurch in dem Mischkanal 22 beim Eintreten in den zweiten Parallelbereich 21 eine im Wesentlichen homogene Temperaturverteilung vorhanden ist. Dadurch können Ungleichmäßigkeiten der Erwärmung und Verdampfung des Arbeitsmediums in dem ersten Parallelbereich 21 im Wesentlichen ausgeglichen werden, so dass aus der Auslassöffnung 12 ein im Wesentlichen vollständig verdampftes Arbeitsmedium aus dem Verdampferwärmeübertrager 4 austritt. Dadurch kann der Wirkungsgrad des Systems 1 erhöht und auch die Lebensdauer der Expansionsmaschine 5 in vorteilhafter Weise verbessert werden.

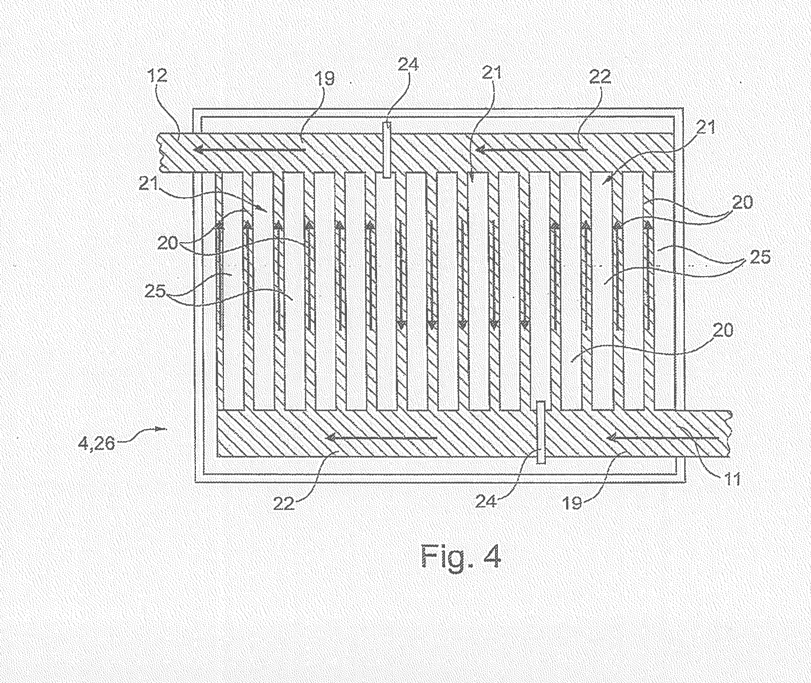

In Fig. 4 ist ein zweites Ausführungsbeispiel des Verdampferwärmeübertragers 4 dargestellt. Im Nachfolgenden werden im Wesentlichen nur die Unterschiede zu dem ersten Ausführungsbeispiel gemäß Fig. 2 und 3 beschrieben. Der Strömungskanal 19 ist durch zwei Trennbleche 24 unterbrochen, so dass dadurch an dem Verdampferwärmeübertrager 4 sich drei Parallelbereiche 21 ausbilden. Ein erster Parallelbereich ist dabei gemäß der Darstellung in Fig. 4 rechts von dem unteren Trennblech 24, ein zweiter Parallelbereich 21 zwischen dem in Fig. 4 unten dargestellten Trennblech 24 und dem in Fig. 4 oben dargestellten Trennblech 24 angeordnet und der dritte Parallelbereich 21 ist links von dem in Fig. 4 oben dargestellten Trennblech 24 vorhanden. Aufgrund dieser Strömungsführung des Arbeitsmediums in dem Verdampferwärmeübertrager 4 in diesem zweiten Ausführungsbeispiel weist der Verdampferwärmeübertrager zwei Mischkanäle 22 auf, in denen eine Durchmischung mit einer damit durch verbundenen homogenen Temperaturverteilung des Arbeitsmediums nach dem Austreten aus der Vielzahl von Strömungsteilkanälen 20 eintritt. Damit kann die homogene Temperaturverteilung und die damit verbundene gleichmäßige Verdampfung des Arbeitsmediums in den Strömungsteilkanälen 20 noch weiter verbessert werden.

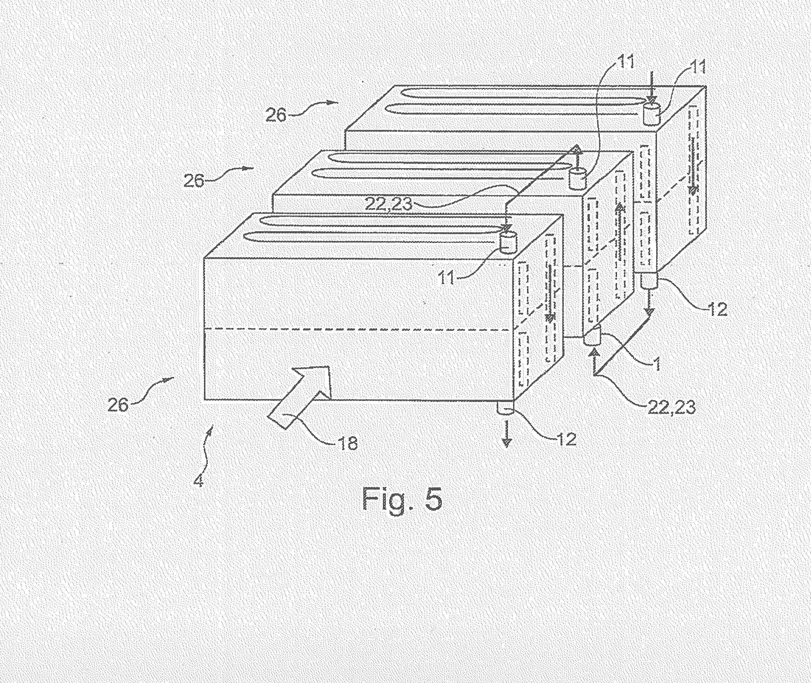

In Fig. 5 ist ein drittes Ausführungsbeispiel des Verdampferwärmeübertragers 4 dargestellt. Der Verdampferwärmeübertrager 4 in dem dritten Ausführungsbeispiel besteht aus insgesamt drei Baueinheiten 26. Die drei Baueinheiten 26 weisen dabei, vorzugsweise getrennte, Gehäuse auf und sind dabei hydraulisch bezüglich des Arbeitsmedium in Reihe geschaltet. Das Arbeitsmedium wird somit zunächst zu dem durch den in Fig. 5 ganz. hinten dargestellten ersten Baueinheit 26 geleitet, anschließend wird das Arbeitsmedium durch eine in Fig. 5 nur mit Pfeilen dargestellten Mischkanal 22 als Mischrohr 23 in die in Fig. 5 dargestellte mittlere, zweite Baueinheit 26 eingeleitet und anschließend wird das Arbeitsmedium nach dem Ausleiten aus der mittleren Baueinheit 26 zu der in Fig. 5 vorderst dargestellten, dritten Baueinheit 26 geleitet und nachdem Ausleiten aus der in Fig. 5 dargestellten vordersten Baueinheit 26 wird das Arbeitsmedium der Expansionsmaschine 5 zugeführt (nicht in Fig. 5 dargestellt). Das Abgas 18 wird dabei gemäß der Darstellung in Fig. 5 durch die drei Baueinheiten 26 durchgeleitet und durchströmt dabei zunächst den dritten, dann die zweite und zum Schluss die erste Baueinheit 26 des Verdampferwärmeübertragers 4. Jede Baueinheit 26 des Verdampferwärmeübertragers 4 weist je einen Parallelbereich 21 mit einer Vielzahl von hydraulisch parallel geschalteten Strömungsteilkanälen 20 auf (nicht dargestellt).

Insgesamt betrachtet sind mit dem erfindungsgemäßen System 1 wesentliche Vorteile verbunden. Aufgrund der Durchmischung des Arbeitsmediums in dem Mischkanal 20 nach dem Ausleiten aus einer Vielzahl von Strömungsteilkanälen 20 vor dem Einleiten in eine weitere Vielzahl von Strömungsteilkanälen 20 des Verdampferwärmeübertragers 4 kann das Arbeitsmedium in dem Verdampferwärmeübertrager 4 im Wesentlichen vollständig und gleichmäßig verdampft werden. Dadurch erhöht sich die Leistungsfähigkeit bzw. der Wirkungsgrad des Systems 1 und die Lebensdauer der Expansionsmaschine 5 kann dadurch in vorteilhafter Weise verlängert werden.

### Bezugszeichenliste

- 1: System
- 2: Leitung
- 3: Pumpe
- 4: Verdampferwärmeübertrager
- 5: Expansionsmaschine
- 6: Kondensator
- 7: Auffang- und Ausgleichsbehälter
- 8: Verbrennungsmotor
- 9: Hubkolbenverbrennungsmotor
- 10: Abgasleitung
- 11: Einlassöffnung
- 12: Auslassöffnung
- 13: Ladeluftleitung
- 14: Ladeluftkühler
- 15: Abgasrückführleitung
- 16: Frischluft
- 17: Abgasturbolader
- 18: Abgas
- 19: Strömungskanal
- 20: Strömungsteilkanal
- 21: Parallelbereich
- 22: Mischkanal
- 23: Mischrohr
- 24: Trennblech
- 25: Abgasströmungsteilkanal
- 26: Baueinheit

## Patentansprüche

1. System (1) zur Nutzung von Abwärme eines Verbrennungsmotors (8) mittels des Clausius-Rankine-Kreisprozesses, umfassend
- einen Kreislauf mit Leitungen (2) mit einem Arbeitsmedium, insbesondere Wasser,
- eine Pumpe (3) zum Fördern des Arbeitsmediums,
- einen Verdampferwärmeübertrager (4) zum Verdampfen des flüssigen Arbeitsmediums mit Abwärme des Verbrennungsmotors (8) mit einer Einlassöffnung (11) zum Einleiten des Arbeitsmediums in einen Strömungskanal (19) und eine Auslassöffnung (12) zum Ausleiten des Arbeitsmediums aus dem Strömungskanal (19) und der Strömungskanal (19) in mehrere hydraulisch parallel geschaltete Strömungsteilkanäle (20) unterteilt ist,
- eine Expansionsmaschine (5),
- einen Kondensator (6) zum Verflüssigen des dampfförmigen Arbeitsmediums,
- einen Auffang- und Ausgleichsbehälter (7) für das flüssige Arbeitsmedium,
**dadurch gekennzeichnet, dass**
der Verdampferwärmeübertrager (4) einen Mischkanal (22) aufweist und in Strömungsrichtung des Arbeitsmediums wenigstens zwei hydraulisch parallel geschaltete Strömungsteilkanäle (20) in den Mischkanal (22) münden und in Strömungsrichtung des Arbeitsmediums der Mischkanal (22) in wenigstens zwei hydraulisch parallel geschaltete Strömungsteilkanäle (20) mündet.

2. System nach Anspruch 1, **dadurch gekennzeichnet, dass** der Verdampferwärmeübertrager (4) wenigstens zwei Mischkanäle (22) aufweist und in Strömungsrichtung des Arbeitsmediums hydraulisch zwischen den wenigstens zwei Mischkanälen (22) hydraulisch in Reihe zu dem wenigstens einen Mischkanal (22) jeweils wenigstens zwei hydraulisch parallel geschaltete Strömungsteilkanäle (20) angeordnet sind.

3. System nach Anspruch 1 oder 2, **dadurch gekennzeichnet, dass** der Verdampferwärmeübertrager (4) wenigstens zwei Parallelbereiche (21) mit wenigstens zwei hydraulisch parallel geschaltete Strömungsteilkanäle (20) aufweist.

4. System nach Anspruch 3, **dadurch gekennzeichnet, dass** die wenigstens zwei Parallelbereiche (21) wenigstens 2, 5, 10, 20 oder 30 hydraulisch parallel geschaltete Strömungsteilkanäle (20) aufweist.

5. System nach Anspruch 3 oder 4, **dadurch gekennzeichnet, dass** der Verdampferwärmeübertrager (4) mehrere getrennte Baueinheiten (26) umfasst und in jeder Baueinheit (26) wenigstens ein, vorzugsweise nur ein, Parallelelbereich (21) angeordnet ist und die Baueinheiten (26) hydraulisch mit dem Mischkanal (22) miteinander verbunden sind.

6. System nach Anspruch 3 oder 4, **dadurch gekennzeichnet, dass** der Verdampferwärmeübertrager (4) nur eine Baueinheit (26) umfasst und in der Baueinheit (26) wenigstens zwei Parallelbereiche (21) angeordnet sind.

7. System nach einem oder mehreren der vorhergehenden Ansprüche, **dadurch gekennzeichnet, dass** der Verdampferwärmeübertrager (4) wenigstens einen Abgasströmungskanal, vorzugsweis eine Vielzahl an Abgasströmungsteilkanälen (25), zum Durchleiten von Abgas umfasst zur Abgabe von Wärme von dem Abgas an das Arbeitsmedium und/oder der Verdampferwärmeübertrager (4) ein Plattenwärmeübertrager, ein Spiralwärmeübertrager, ein Rohrbündelwärmeübertrager oder ein Mantelrohrwärmeübertrager ist und/oder das Abgas und das Arbeitsmedium im Gegenstrom geführt sind und/oder von dem System (1) ein Verfahren gemäß einem oder mehrerer der Ansprüche 8 bis 10 ausführbar ist.

8. Verfahren zum Betreiben eines System (1) zur Nutzung von Abwärme eines Verbrennungsmotors (8) mittels des Clausius-Rankine-Kreisprozesses, eines Systems (1) gemäß einem oder mehrerer der Ansprüche 1 bis 7, mit den Schritten:
- Fördern eines Arbeitsmediums in einem Kreislauf durch Leitungen (2) mittels einer Pumpe (3),
- Verdampfen des Arbeitsmediums in einem Verdampferwärmeübertrager (4) mit Abwärme des Verbrennungsmotors (8),
- Expandieren des Arbeitsmediums an einer Expansionsmaschine (5) und Leisten von mechanischer Arbeit,
- Verflüssigen des dampfförmigen Arbeitsmediums an einem Kondensator (6),
**dadurch gekennzeichnet, dass**
das Arbeitsmedium in dem Verdampferwärmeübertrager (4) eingeleitet wird und durch einen Strömungskanal (19) strömt, hydraulisch nach dem Strömungskanal (19) in wenigstens zwei Strömungsteilkanäle (20) als Parallelbereich (21) eingeleitet wird und durch die wenigstens zwei Strömungsteilkanäle (20) hydraulisch parallel geleitet wird, hydraulisch nach den wenigstens zwei Strömungsteilkanälen (20) in einen Mischkanal (22) eingeleitet wird und sich in dem Mischkanal (22) das aus den wenigstens zwei Strömungsteilkanälen (20) eingeleitete Arbeitsmedium durchmischt wird und hydraulisch nach dem Mischkanal (22) das Arbeitsmedium in wenigstens zwei Strömungsteilkanäle (20) als Parallelbereich (21) eingeleitet wird und durch die wenigstens zwei Strömungsteilkanäle (20) hydraulisch parallel geleitet wird und hydraulisch nach den wenigstens zwei Strömungsteilkanälen (20) in den Strömungskanal (19) eingeleitet wird.

9. Verfahren nach Anspruch 8, **dadurch gekennzeichnet, dass** das Arbeitsmedium durch wenigstens 3 Parallelbereiche (21) geleitet wird und hydraulisch zwischen den wenigstens 3 Parallelbereichen (21) durch je einen Mischkanal (22) geleitet und vermischt wird, so dass das Arbeitsmedium durch wenigstens 2 Mischkanälen (22) geleitet und vermischt wird.

10. Verfahren nach Anspruch 8 oder 9, **dadurch gekennzeichnet, dass** Abgas zu dem wenigstens einen Parallelbereich (21) geleitet wird und dadurch von dem Abgas Wärme auf das Arbeitsmedium übertragen wird und vorzugsweise das Abgas an dem wenigstens einen Parallelbereich (21) durch wenigstens einen Abgasströmungskanal, vorzugsweis eine Vielzahl an Abgasströmungsteilkanälen (25), geleitet wird.

11. Verbrennungsmotor (8), insbesondere Hubkolbenverbrennungsmotor (9), mit einem System (1) zur Nutzung von Abwärme des Verbrennungsmotors (8) mittels des Clausius-Rankine-Kreisprozesses, umfassend
- einen Kreislauf mit Leitungen (2) mit einem Arbeitsmedium, insbesondere Wasser,
- eine Pumpe (3) zum Fördern des Arbeitsmediums,
- einen von der Abwärme des Verbrennungsmotors (8) erwärmbaren Verdampferwärmeübertrager (4) zum Verdampfen des flüssigen Arbeitsmediums,
- eine Expansionsmaschine (5),
- einen Kondensator (6) zum Verflüssigen des dampfförmigen Arbeitsmediums,
- einen Auffang- und Ausgleichsbehälter (7) für das flüssige Arbeitsmedium,
**dadurch gekennzeichnet, dass**
das System (1) gemäß einem oder mehrerer der Ansprüche 1 bis 7 ausgebildet ist
und/oder
ein Verfahren gemäß einem oder mehrerer der Ansprüche 8 bis 10 ausführbar ist.

## Claims

1. A system (1) for utilising the waste heat of an internal combustion engine (8) by means of the Clausius-Rankine cycle process, comprising
- a circuit having lines (2) with a working medium, particularly water,
- a pump (3) for conveying the working medium,
- an evaporator heat exchanger (4) for vaporising the liquid working medium with waste heat of the internal combustion engine (8) with an inlet opening (11) for conveying the working medium into a flow duct (19) and an outlet opening (12) for conveying the working medium out of the flow duct (19) and the flow duct (19) is divided into a plurality of flow duct parts (20), connected hydraulically in parallel,
- an expander (5),
- a condenser (6) for liquefying the vaporous working medium, and
- a collecting and equalising tank (7) for the liquid working medium,
**characterised in that**
the evaporator heat exchanger (4) has a mixing duct (22) and in the flow direction of the working medium at least two flow duct parts (20), connected hydraulically in parallel, open into the mixing duct (22) and in the flow direction of the working medium the mixing duct (22) opens into at least two flow duct parts (20), connected hydraulically in parallel.

2. The system according to claim 1, **characterised in that** the evaporator heat exchanger (4) has at least two mixing ducts (22) and in each case at least two flow duct parts (20), connected hydraulically in parallel, are arranged in the flow direction of the working medium hydraulically between the at least two mixing ducts (22) hydraulically in series to the at least one mixing duct (22).

3. The system according to claim 1 or 2, **characterised in that** the evaporator heat exchanger (4) has at least two parallel regions (21) with at least two flow duct parts (20) connected hydraulically in parallel.

4. The system according to claim 3, **characterised in that** the at least two parallel regions (21) have at least 2, 5, 10, 20 or 30 flow duct parts (20) connected hydraulically in parallel.

5. The system according to claim 3 or 4, **characterised in that** the evaporator heat exchanger (4) comprises a plurality of separate units (26) and at least one, preferably only one, parallel region (21) is arranged in each unit (26), and the units (26) are interconnected hydraulically to the mixing duct (22).

6. The system according to claim 3 or 4, **characterised in that** the evaporator heat exchanger (4) comprises only one unit (26) and at least two parallel regions (21) are arranged in the unit (26).

7. The system according to one or more of the preceding claims, **characterised in that** the evaporator heat exchanger (4) comprises at least one exhaust gas flow duct, preferably a plurality of exhaust gas flow ducts (25), for conveying exhaust gas to give off heat from the exhaust gas to the working medium and/or the evaporator heat exchanger (4) is a plate heat exchanger, a spiral heat exchanger, a shell and tube heat exchanger or a casing pipe heat exchanger and/or the exhaust gas and the working medium are guided in counterflow and/or
a method according to one or more of the claims 8 through 10 can be carried out by the system (1).

8. A method for operating a system (1) for utilising the waste heat of an internal combustion engine (8) by means of the Clausius-Rankine cycle process, a system (1) according to one or more of claims 1 through 7, comprising the steps:
- conveying a working medium in a circuit through lines (2) by means of a pump (3),
- vaporising the working medium in an evaporator heat exchanger (4) with waste heat of the internal combustion engine (8),
- expanding the working medium in an expander (5) and performing mechanical work,
- liquefying the vaporous working medium in a condenser (6),
**characterised in that**
the working medium is conveyed into the evaporator heat exchanger (4) and flows through a flow duct (19), is conveyed hydraulically downstream of the flow duct (19) into at least two flow duct parts (20) as a parallel region (21), and is conveyed hydraulically in parallel through the at least two flow duct parts (20), is conveyed hydraulically downstream of the at least two flow duct parts (20) into a mixing duct (22), and the working medium conveyed out of the at least two flow duct parts (20), is mixed in the mixing duct (22), and hydraulically downstream of the mixing duct (22) the working medium is conveyed into at least two flow duct parts (20) as a parallel region (21), and is conveyed hydraulically in parallel through the at least two flow duct parts (20), and is conveyed hydraulically downstream of the at least two flow duct parts (20) into the flow duct (19).

9. The method according to claim 8, **characterised in that** the working medium is conveyed through at least 3 parallel regions (21) and conveyed hydraulically between the at least 3 parallel regions (21) through a mixing duct (22) in each case and mixed, so that the working medium is conveyed through at least 2 mixing ducts (22) and mixed.

10. The method according to claim 8 or 9, **characterised in that** exhaust gas is conveyed to the at least one parallel region (21) and thereby heat is transferred from the exhaust gas to the working medium and preferably the exhaust gas is conveyed in the at least one parallel region (21) through at least one exhaust gas flow duct, preferably a plurality of exhaust gas flow duct parts (25).

11. An internal combustion engine (8), particularly an internal combustion reciprocating piston engine (9), with a system (1) for utilising the waste heat of the internal combustion engine (8) means of the Clausius-Rankine cycle process, comprising
- a circuit having lines (2) with a working medium, particularly water,
- a pump (3) for conveying the working medium,
- an evaporator heat exchanger (4) that can be heated by the waste heat of the internal combustion engine (8) for vaporising the liquid working medium,
- an expander (5),
- a condenser (6) for liquefying the vaporous working medium,
- a collecting and equalising tank (7) for the liquid working medium,
**characterised in that**
the system (1) is designed according to one or more of claims 1 through 7
and/or
a method can be carried out according to one or more of claims 8 through 10.

## Revendications

1. Système (1) conçu pour l'utilisation de chaleur perdue d'un moteur à combustion interne (8), ladite utilisation étant mise en œuvre au moyen du processus cyclique de Clausius-Rankine, ledit système comprenant :
- un circuit avec des conduites (2) comprenant un fluide de travail, en particulier de l'eau,
- une pompe (3) servant à faire circuler le fluide de travail,
- un échangeur de chaleur formant un évaporateur (4) servant à l'évaporation du fluide de travail liquide avec de la chaleur perdue du moteur à combustion interne (8), ledit échangeur de chaleur formant l'évaporateur comprenant une ouverture d'entrée (11) servant à l'introduction du fluide de travail dans un conduit d'écoulement (19) et comprenant une ouverture de sortie (12) servant à l'évacuation du fluide de travail sortant du conduit d'écoulement (19), et le conduit d'écoulement (19) est subdivisé en plusieurs conduits partiels d'écoulement (20) montés en parallèle hydrauliquement,
- une machine de détente (5),
- un condenseur (6) servant à la fluidification du fluide de travail se présentant à l'état de vapeur,
- un réservoir collecteur et compensateur (7) pour le fluide de travail liquide,
**caractérisé**
**en ce que** l'échangeur de chaleur formant l'évaporateur (4) présente un conduit de mélange (22) et, dans la direction d'écoulement du fluide de travail, au moins deux conduits partiels d'écoulement (20) montés en parallèle hydrauliquement débouchent dans le conduit de mélange (22) et, dans la direction d'écoulement du fluide de travail, le conduit de mélange (22) débouche dans au moins deux conduits partiels d'écoulement (20) montés en parallèle hydrauliquement.

2. Système selon la revendication 1, **caractérisé en ce que** l'échangeur de chaleur formant l'évaporateur (4) présente au moins deux conduits de mélange (22) et, dans la direction d'écoulement du fluide de travail, à chaque fois au moins deux conduits partiels d'écoulement (20) montés en parallèle hydrauliquement sont disposés hydrauliquement entre les conduits de mélange (22) au moins au nombre de deux et disposés hydrauliquement en série par rapport au conduit de mélange (22) au moins au nombre de un.

3. Système selon la revendication 1 ou 2, **caractérisé en ce que** l'échangeur de chaleur formant l'évaporateur (4) présente au moins deux zones parallèles (21) comprenant au moins deux conduits partiels d'écoulement (20) montés en parallèle hydrauliquement.

4. Système selon la revendication 3, **caractérisé en ce que** les zones parallèles (21) au moins au nombre de deux présentent au moins 2, 5, 10, 20 ou 30 conduits partiels d'écoulement (20) montés en parallèle hydrauliquement.

5. Système selon la revendication 3 ou 4, **caractérisé en ce que** l'échangeur de chaleur formant l'évaporateur (4) comprend plusieurs ensembles unitaires (26) séparés, et au moins une zone parallèle (21), de préférence seulement une, est disposée dans chaque ensemble unitaire (26), et les ensembles unitaires (26) sont reliés les uns aux autres, hydrauliquement, par le conduit de mélange (22).

6. Système selon la revendication 3 ou 4, **caractérisé en ce que** l'échangeur de chaleur formant l'évaporateur (4) comprend seulement un ensemble unitaire (26), et au moins deux zones parallèles (21) sont disposées dans l'ensemble unitaire (26).

7. Système selon l'une quelconque ou plusieurs des revendications précédentes, **caractérisé en ce que** l'échangeur de chaleur formant l'évaporateur (4) comprend, pour faire circuler les gaz d'échappement, au moins un conduit d'écoulement de gaz d'échappement, de préférence une multiplicité de conduits partiels d'écoulement de gaz d'échappement (25), ledit échangeur de chaleur formant l'évaporateur servant à fournir au fluide de travail, de la chaleur provenant des gaz d'échappement, et / ou l'échangeur de chaleur formant l'évaporateur (4) est un échangeur de chaleur à plaques, un échangeur de chaleur spiralé, un échangeur de chaleur à faisceau de tubes ou bien un échangeur de chaleur à tubes de protection et / ou les gaz d'échappement et le fluide de travail sont guidés suivant un flux circulant à contre-courant et / ou un procédé selon l'une quelconque ou plusieurs des revendications 8 à 10 peut être mis en œuvre à partir du système (1).

8. Procédé de fonctionnement d'un système (1) conçu pour l'utilisation de chaleur perdue d'un moteur à combustion interne (8), ladite utilisation étant mise en œuvre au moyen du processus cyclique de Clausius-Rankine, ledit procédé concernant un système (1) réalisé selon l'une quelconque ou plusieurs des revendications 1 à 7 et comprenant les étapes consistant :
- à faire circuler un fluide de travail au moyen d'une pompe (3), ledit fluide de travail circulant dans un circuit, en passant par des conduites (2),
- à évaporer le fluide de travail dans un échangeur de chaleur formant un évaporateur (4), avec de la chaleur perdue du moteur à combustion interne (8),
- à détendre le fluide de travail sur une machine de détente (5) et à effectuer un travail mécanique,
- à fluidifier, sur un condenseur (6), le fluide de travail se présentant à l'état de vapeur,
**caractérisé**
**en ce que** le fluide de travail est introduit dans l'échangeur de chaleur formant l'évaporateur (4) et circule à travers un conduit d'écoulement (19), ledit fluide de travail est introduit hydrauliquement en aval du conduit d'écoulement (19), dans au moins deux conduits partiels d'écoulement (20) configurés comme une zone parallèle (21), et est dirigé hydrauliquement, de manière parallèle, par les conduits partiels d'écoulement (20) au moins au nombre de deux, ledit fluide de travail est introduit dans un conduit de mélange (22), ladite introduction étant effectuée hydrauliquement en aval des conduits partiels d'écoulement (20) au moins au nombre de deux, et le fluide de travail introduit, qui sort des conduits partiels d'écoulement (20) au moins au nombre de deux, est mélangé dans le conduit de mélange (22), et ledit fluide de travail est introduit hydrauliquement en aval du conduit de mélange (22), dans au moins deux conduits partiels d'écoulement (20) configurés comme une zone parallèle (21), et est dirigé hydrauliquement, de manière parallèle, par les conduits partiels d'écoulement (20) au moins au nombre de deux, et ledit fluide de travail est introduit dans le conduit d'écoulement (19), ladite introduction étant effectuée hydrauliquement en aval des conduits partiels d'écoulement (20) au moins au nombre de deux.

9. Procédé selon la revendication 8, **caractérisé en ce que** le fluide de travail est dirigé par au moins 3 zones parallèles (21) et est dirigé et mélangé hydrauliquement entre les zones parallèles (21) au moins au nombre de 3, à chaque fois par un conduit de mélange (22), de sorte que le fluide de travail est dirigé et mélangé par au moins 2 conduits de mélange (22).

10. Procédé selon la revendication 8 ou 9, **caractérisé en ce que** les gaz d'échappement sont dirigés jusqu'à la zone parallèle (21) au moins au nombre de un, et **en ce que** de la chaleur est transférée depuis les gaz d'échappement jusqu'au fluide de travail et, de préférence, les gaz d'échappement sont dirigés sur la zone parallèle (21) au moins au nombre de un, en passant par au moins un conduit d'écoulement de gaz d'échappement, de préférence en passant par une multiplicité de conduits partiels d'écoulement de gaz d'échappement (25).

11. Moteur à combustion interne (8), en particulier moteur à combustion interne à pistons alternatifs (9), comprenant un système (1) conçu pour l'utilisation de chaleur perdue du moteur à combustion interne (8), ladite utilisation étant mise en œuvre au moyen du processus cyclique de Clausius-Rankine, ledit système comprenant :
- un circuit avec des conduites (2) comprenant un fluide de travail, en particulier de l'eau,
- une pompe (3) servant à faire circuler le fluide de travail,
- un échangeur de chaleur formant un évaporateur (4) servant à l'évaporation du fluide de travail liquide, ledit échangeur de chaleur formant l'évaporateur pouvant être chauffé par de la chaleur perdue du moteur à combustion interne (8),
- une machine de détente (5),
- un condenseur (6) servant à la fluidification du fluide de travail se présentant à l'état de vapeur,
- un réservoir collecteur et compensateur (7) pour le fluide de travail liquide,
**caractérisé**
**en ce que** le système (1) est conçu selon l'une quelconque ou plusieurs des revendications 1 à 7,
et / ou
**en ce qu'**un procédé peut être mis en œuvre selon l'une quelconque ou plusieurs des revendications 8 à 10.
